# EUROPEAN PATENT APPLICATION

(11) **EP 0 953 921 A2**
(43) Date of publication of application: **03.11.1999**
(21) Application number: 99303138.4
(22) Date of filing: 22.04.1999
(51) Int. Cl.: G06F 17/30

(54) **Device and method for information processing and storage medium containing a control program for information processing**

(30) Priority: 28.04.1998 JP 11932498
(71) Applicant: Sharp Kabushiki Kaisha, Osaka-shi, Osaka 545-8522 (JP)
(72) Inventor: Fujisawa, Masayuki, Sakai-shi, Osaka 590-0113 (JP)
(74) Representative: Brown, Kenneth Richard

(57) **Abstract**

An information-processing device includes an interface section for communicating with a server having hypertext data via a network, an input section for inputting a URL corresponding to hypertext data to be displayed, a data acquisition section for acquiring the hypertext data from the server via the interface section according to the URL input by the input section, a data buffer for temporarily storing the hypertext data acquired by the data acquisition section, a URL extraction section for extracting a URL indicating a linkage from the hypertext data stored in the data buffer, a URL register control section for classifying the URL extracted by the URL extraction section and registering the extracted URL in a URL management memory in correspondence with a bookmark, and a display control section for displaying the bookmark, the URL and the hypertext data on a display.

## Description

### BACKGROUND OF THE INVENTION

### 1.Field of the Invention

The present invention relates to an information-processing device and an information-processing method for processing and displaying data by use of hypertext data or other data distributed on storage devices or networks such as the World Wide Web (WWW) which is one of network services, the device and the method being applicable to a personal computer and an intelligent terminal which can communicate with servers connected to the networks (e.g., the Internet). The invention also relates to a computer-readable storage medium having thereon a control program for such processing.

### 2.Description of Related Art

Recently, with widespread use of WWW browsers constructed on networks, users can access information sources on the WWW browsers by designating addresses of Uniform Resource Locator (URL) to read a variety of home pages and obtain necessary information such as hypertext data through information-processing equipment connected to the networks.

Systems for obtaining hypertext data from networks typified by the WWW browsers provides webs in which various information sources such as servers and databases are connected to each other in a linked relation.

Accordingly, when a user selects to read a page presenting a certain piece of information from a server or a database connected to a network, the user may see linkage information on the page. Such linkage information mostly shows links to information sources concerning the page the user is reading. Usually the links are selected one by one so that data of a page corresponding to the selected link is displayed, and then the URL of the displayed page is registered in correspondence with a bookmark in a bookmark management section (which may be referred to as a URL management section).

Thereby, the user can obtain necessary information easily at any time by tracing the link to a page which he/she wants to read, by use of the URL thereof registered in the bookmark management section.

Besides, if the user wishes to choose and read pages concerning a specific information, he/she can utilize a network service called "retrieving server" or "retrieving engine." When utilizing such a retrieving server, the user accesses a page in the retrieving server on a WWW browser, displays it and inputs a keyword using the retrieving server. Then the retrieving server retrieves pages containing the keyword and transmits the URLs of found-out pages in a hypertext markup language (HTML) form as retrieving results to the user. The URLs which represent the addresses of the pages are listed as hyperlinks. Then the user designates the hyperlinks one by one to access the linked pages and display them. The URLs of the pages are registered in the bookmark management section.

For example, Japanese Unexamined Patent Publication No. HEI 9(1997)-311869 proposes an internet retrieving server as a technique for information collection using the Internet. The retrieving server provides a homepage for a retrieving request, on which the user writes retrieving conditions through his/her client (intelligent terminal). The retrieving server analyzes the retrieving conditions, selects URLs which provide requested information, automatically accessing the URLs to collect information, and transmits the results to the client.

According to the retrieving system of Japanese Unexamined Patent Publication No. HEI 9(1997)-311869, however, the retrieving results are transmitted as page data (of the accessed pages) to the client. Accordingly, when the user finds, in the retrieving results, another page which he/she wishes to read, the user must designate the URL of the page directly to the WWW browser so as to acquire and display the page, or register the URL in the bookmark management section in proper arrangement. In other words, the user himself/herself must classify and arrange URLs in the bookmark management section.

Generally, the number of hyperlinks set on one page varies greatly, and may be more than several tens when it is large. Especially in the case of pages found out by the retrieving server, the number of the pages may become enormous. Even if retrieving conditions are added for more focused retrieving, the number of found-out pages may amount to several tens to several hundreds. For these reasons,
(1) it is greatly time- and labor-consuming to see every one of several tens to several hundreds of pages and correctly register the URLs of the pages in the bookmark management section, because in most cases summaries displayed with the URLs as retrieving results are not so informative that the user can choose desired information based on the summaries; and
(2) further, telephone charges and network connection charges increase in the case of dial-up connection as connection time through a telephone line becomes longer.

In this connection, with use of software such as "autocruising," "autosurfing" and "autopilot," it is possible to download data of the pages into a memory such as a local hard disk during on-line connection and read the data without haste after disconnecting the line. As a result, the connection time can be reduced. However, since the URLs of pages to see by autocruising must be registered to the software beforehand, operations as time- and labor-consuming as those of (1) are required.

It is also possible to store page data of a displayed page directly in a memory without registering URLs in the bookmark management section, but the URLs cannot be classified and unnecessary ones cannot be deleted. Furthermore, a portion having an image cannot be stored and only texts are stored. Therefore a page layout is lost.

### SUMMARY OF THE INVENTION

The present invention provides an information-processing device including an interface section for communicating with a server having hypertext data via a network, an input section for inputting a URL corresponding to hypertext data to be displayed, a data acquisition section for acquiring the hypertext data from the server via the interface section according to the URL input by the input section, a data buffer for temporarily storing the hypertext data acquired by the data acquisition section, a URL extraction section for extracting a URL indicating a linkage from the hypertext data stored in the data buffer, a URL register control section for classifying the URL extracted by the URL extraction section and registering the extracted URL in a URL management memory in correspondence with a bookmark and a display control section for displaying the bookmark, the URL and the hypertext data on a display.

According to the present invention, the information-processing device may be constructed so that URLs representing hyperlinks are automatically extracted from obtained hypertext data, classified and registered in the URL management memory. Thereby the invention may be utilized as a device which autocruises for hypertext data by easily retrieving URLs necessary for the user.

These and other objects of the present application will become more readily apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

Fig. 1 is a block diagram illustrating a general construction of an information-processing device in accordance with the present invention;
Fig. 2 is a flowchart illustrating a process of information-processing operation (1) in accordance with the present invention;
Fig. 3 is a flowchart illustrating a process of information-processing operation (2) in accordance with the present invention;
Fig. 4 is a flowchart illustrating a process of information-processing operation (3) in accordance with the present invention; and
Fig. 5 is a flowchart illustrating a process of information-processing operation (4) in accordance with the present invention.

### DESCRIPTION OF THE PREFERRED EMBODIMENTS

In another aspect of the present invention, there is provided a method for information processing. The method includes communicating with a server having hypertext data via a network by means of an interface section, inputting a URL corresponding to hypertext data to be displayed by means of an input section, acquiring the hypertext data from the server via the interface section according to the input URL, temporarily storing the acquired hypertext data in a data buffer, extracting a URL indicating a linkage from the hypertext data stored in the data buffer, classifying the extracted URL and registering the extracted URL in a URL management memory in correspondence with a bookmark, and displaying the bookmark, the URL and the hypertext data on a display.

In the present invention, the interface section may preferably be made up of a modem, a transmitted/ received data converter and the like. The data acquisition section, the data buffer, the URL extraction section, the URL register control section and the display control section may be made up of a computer including a CPU, a ROM, a RAM and I/O ports. The data buffer may be made up of the RAM of the computer. The URL management memory may preferably be composed of an EEPROM and a floppy disk.

The input section may preferably be composed of a keyboard, a mouse, a pen and tablet, a trackball and the like.

The display section may preferably be composed of a cathode-ray tube (CRT) display, a liquid crystal display (LCD), a plasma display (PD) or the like.

According to the present invention, since URLs representing hyperlinks are automatically extracted from hypertext data acquired by the data acquisition section, classified, and registered in the URL management memory in correspondence with bookmarks, a user may utilize the present invention for autocruising for hypertext data by easily retrieving necessary URLs by designating the bookmarks thereof.

According to the present invention, the URL register control section may generate a folder having a name input by the input section, classify the extracted URL on the basis of the generated folder and register the extracted URL in the URL management memory.

With this construction, since the URL extracted from the obtained hypertext data is classified based on the folder of the user's own inputting name and is registered in the URL management memory, the user may read a large number of URLs registered in the URL management memory on a folder basis, and may easily obtain and read hypertext data corresponding to a URL desired by the user.

According to the present invention, the URL register control section may generate a folder whose name is a keyword extracted from the hypertext data, classify the extracted URL on the basis of the generated folder and register the extracted URL in the URL management memory.

With this construction, since the URL extracted from the obtained hypertext data is classified based on the folder whose name is the keyword extracted from the hypertext data and is registered in the URL management memory, the user may read a large number of URLs registered in the URL management memory on a folder basis and easily obtain and read hypertext data corresponding to a URL desired by the user.

According to the present invention, the data acquisition section may store, in a data management memory, hypertext data corresponding to the URL registered in the URL management memory by the URL register control section.

With this construction, since hypertext data stored in the data management memory can be read by designating a URL registered in the URL management memory, the user can display and read the hypertext data without connecting to the network.

The present invention is now described in detail by way of example with reference to the accompanying figures, which should not be construed to limit the scope of the invention.

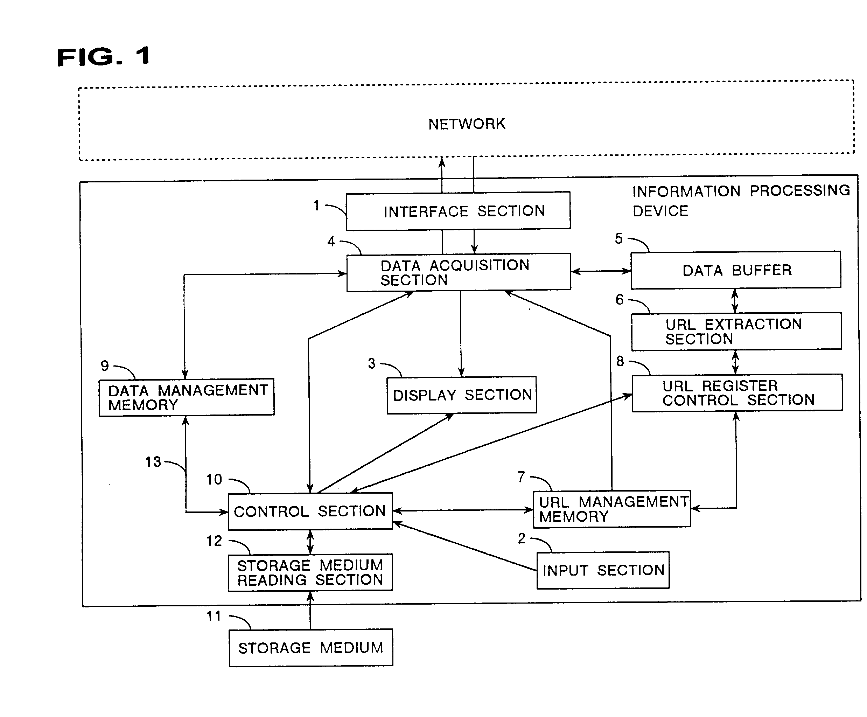

Fig. 1 is a block diagram illustrating a general construction of an information-processing device in accordance with the present invention.

In Fig. 1, the reference numeral 1 denotes an interface section which connects to a network to communicate with servers having hypertext data. The interface section 1 is composed of a modem, a converter for transmitted / received data and the like.

The reference numeral 2 denotes an input section for inputting a user's instruction, which is composed of a keyboard, a pen and tablet, a trackpad, a mouse and the like.

The reference numeral 3 denotes a display section which displays data according to the user's instruction. The display section 3 is composed of a liquid crystal display (LCD), a plasma display (PD), a cathode-ray tube (CRT) display or the like.

The reference numeral 4 denotes a data acquisition section for acquiring hypertext data from a server, an intelligent terminal, a database or the like connected to the network, based on URLs. The data acquisition section 4 is composed of a central processing unit (CPU) and a data acquisition program.

The reference numeral 5 denotes a data buffer which stores the acquired hypertext data temporarily. The data buffer 5 is composed of a random-access memory (RAM).

The reference numeral 6 denotes a URL extraction section for extracting URLs from the hypertext data stored in the data buffer 5. The URL extraction section 6 is composed of a CPU and a URL extraction program.

The reference numeral 7 denotes a URL management memory for registering the URLs extracted from the hypertext data in correspondence with bookmarks. The URL management memory 7 is composed of an electrically erasable programmable read-only memory (EEPROM), a floppy disk and the like.

The reference numeral 8 denotes a URL register control section which generates a folder whose name is an arbitrary character string input by the user, a keyword used for retrieving the server or the like, and registers the extracted URLs under the generated folder in the URL management memory 7. The URL register control section 8 is composed of a CPU and a URL register control program.

The reference numeral 9 denotes a data management memory which stores hypertext data corresponding to URLs stored in the URL management memory. The data management memory 9 is composed of a floppy disk, a hard disk or the like.

The reference numeral 10 denotes a control section composed of a computer including a CPU, a read-only memory (ROM), a RAM and I/O ports. The control section 10 controls the whole device by a control program stored in the ROM. The control section 10 also functions as an input control section to control the input section 2 by an input control program and as a display control section to control display section 3 by a display control program.

The reference numeral 11 denotes a storage medium having an information-processing control program of the present invention and other various kinds of data thereon. The storage medium may be an EEPROM, floppy disk, hard disk, CD-ROM, MD or the like.

The reference numeral 12 denotes a storage medium reading section which is able to read the information-processing control program in the storage medium 11 and install the program in the RAM of the control section 10.

The reference numeral 13 denotes a bus for transmitting control data, URLs and hypertext data and the like.

In another aspect of the present invention, there is provided a storage medium containing thereon an information-processing program for controlling, by means of a computer, an information-processing device having an interface section for communicating with a server having hypertext data via a network. The program performing the functions of causing the computer to input a URL corresponding to hypertext data to be displayed by means of an input section, causing the computer to acquire the hypertext data from the server via the interface section according to the input URL, causing the computer to store the acquired hypertext data temporarily in a data buffer, causing the computer to extract a URL indicating a linkage from the hypertext data stored in the data buffer, causing the computer to classify the extracted URL and register it in a URL management memory in correspondence with a bookmark, and causing the computer to display the bookmark, the URL and the hypertext data on the display section.

According to the present invention, the storage medium may contain an information-processing control program having the function of causing the computer to generate a folder having a name input by the input section, classify the extracted URL on the basis of the generated folder and register the extracted URL in the URL management memory.

According to the present invention, the storage medium may contain an information-processing control program having the function of causing the computer to generate a folder whose name is a keyword extracted from the hypertext data, classify the extracted URL on the basis of the generated folder and register the extracted URL in the URL management memory.

According to the present invention, the storage medium may contain an information-processing control program having the function of causing the computer to store, in a data management memory, hypertext data corresponding to the URL registered in the URL management memory.

Accordingly, by installing, with the help of a storage medium reading section 12, one, some or all of these control programs stored in the storage medium 11 into a RAM, EEPROM, floppy disk or the like of electronic equipment such as a personal computer, a portable intelligent terminal or the like which equipment is provided with the interface section enabling communication with the network, the information-processing function of the present invention can be obtained.

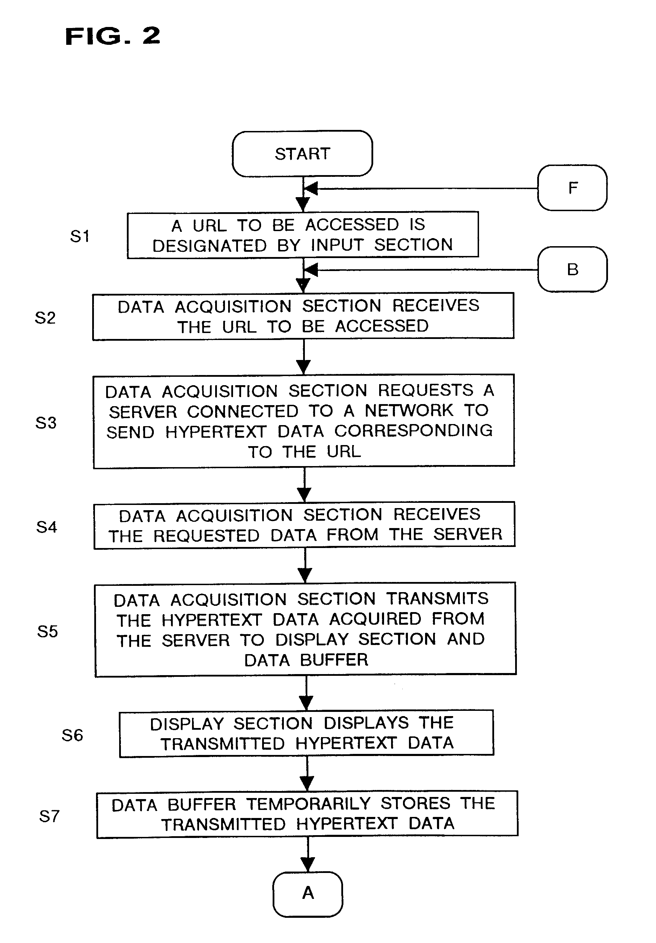

Fig. 2, Fig. 3, Fig. 4 and Fig. 5 are flowcharts illustrating a set of processes (1), (2), (3) and (4) , respectively, of information-processing operation by the information processing device in accordance with the present invention.

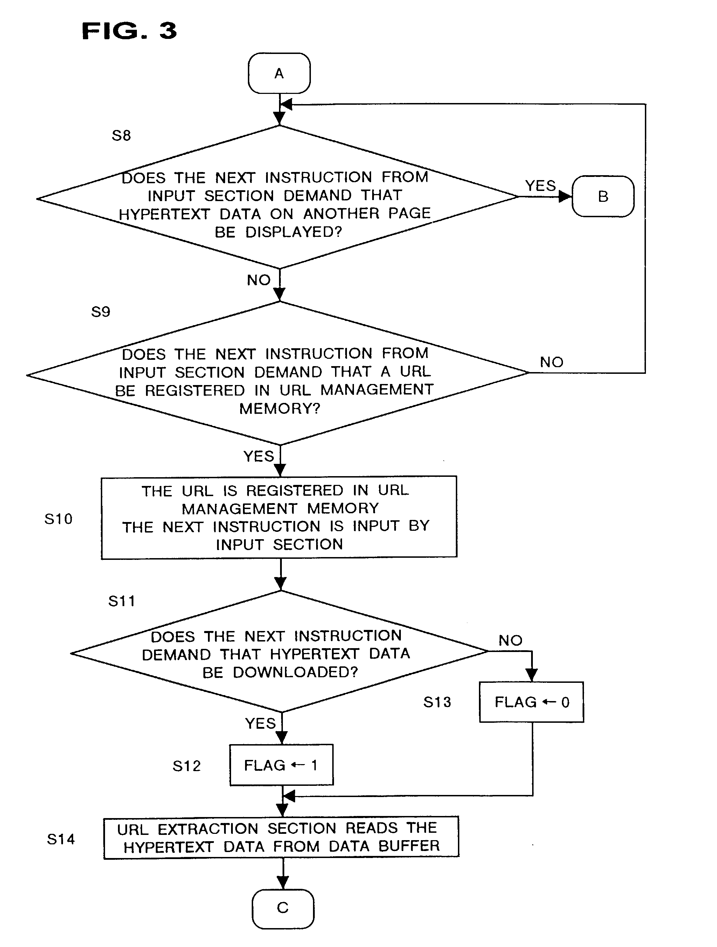

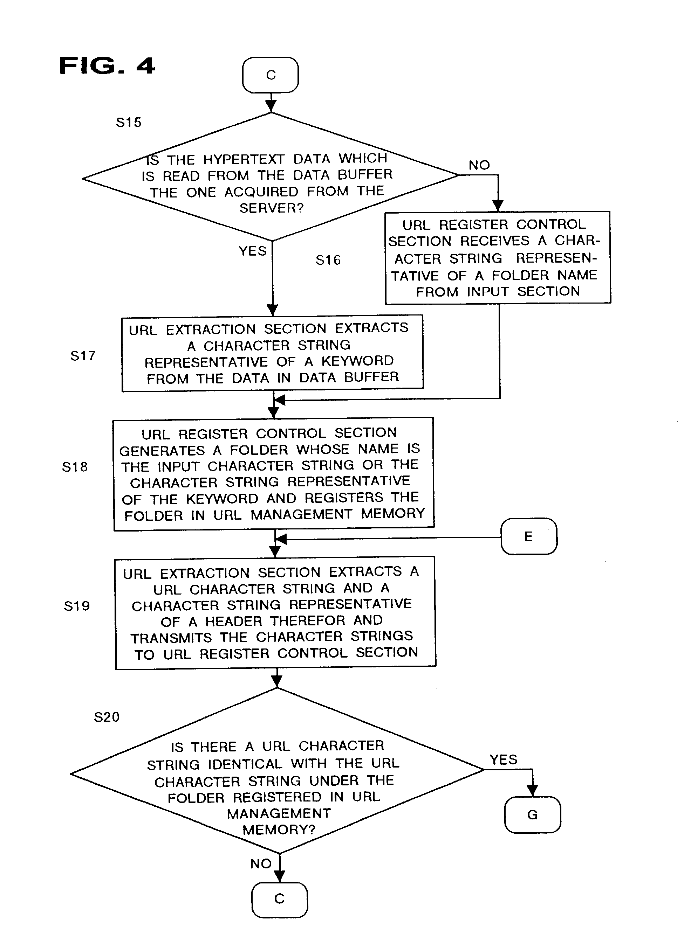

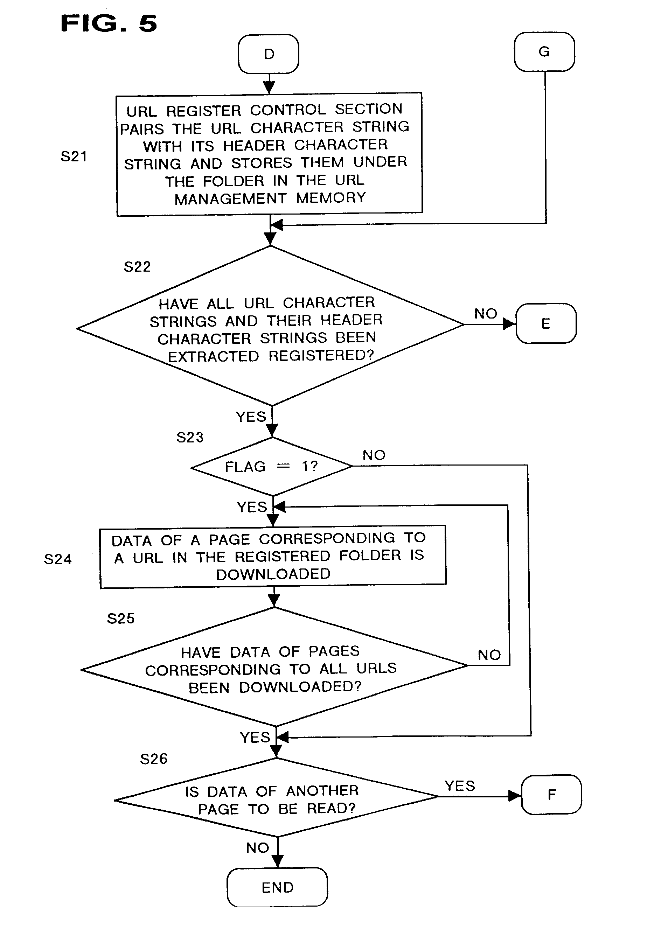

Referring to Figs. 2 to 5, each step of the information processing is described in detail.
Step S1 : A user designates a URL corresponding to a page he/she wants to read by following a hyperlink from a page data (hypertext data) displayed on the display section 3 or selects the corresponding URL out of URLs registered in the URL management memory 7, by means of the input section, so as to obtain the hypertext data of the page to read.
Step S2 : The data acquisition section 4 receives the URL designated by the input section 2.
Step S3 : The data acquisition section 4 requests a server connected to a network to send the hypertext data corresponding to the received URL.
Step S4 : The data acquisition section 4 obtains the requested hypertext data from the server.
Step S5 : The data acquisition section 4 transmits the hypertext data obtained from the server to the display section 3 and the data buffer 5.
Step S6 : The display section 3 displays the hypertext data received from the data acquisition section 4.
Step S7 : The data buffer 5 temporarily stores the hyper text data received from the data acquisition section 4.
Now reference is made to Fig. 3.
Step S8 : The user sees the content of the hypertext data displayed on the display section 3 and gives an instruction by the input section 2. The control section 10 judges whether or not the instruction by the input section 2 demands that hypertext data of another page be displayed. If so, the process goes to Step S2, and if not, the process goes to Step S9.
Step S9 : The control section 10 judges whether or not an instruction received from the input section 2 demands that the URL in the hypertext data of the page displayed on the display section 3 be registered in the URL management memory 7. If so, the process goes to Step S10, and if not, the process goes to Step S8.
Step S10 : When the URL register control section 8 registers the URL in the URL management memory 7, the control section 10 further receives the next instruction from the input section 2.
Step S11 : The control section 10 judges whether or not the next instruction by the input section 2 demands the hypertext data be downloaded. If so, the process goes to Step 12, and if not, the process goes to Step 13.
Step S12 : A flag of 1 is set.
Step S13 : A flag of 0 is set.
Step S14 : The URL extraction section 6 reads the hypertext data out of the data buffer 5.
Now reference is made to Fig. 4.
Step S15 : The URL extraction section 6 judges whether or not the read-out hypertext data is a page data obtained from a server connected to the network. If so, the process goes to Step S17, and if not, the process goes to Step S18.
Step S16 : The URL register control section 8 receives a character string representative of the name of a folder from the input section 2. Then the process goes to Step S18.
Step S17 : The URL extraction section 6 extracts a character string representative of a keyword portion from the hypertext data stored in the data buffer 5.
Step S18 : The URL register control section 8 generates a folder whose name is the character string input by the input section 2 or the extracted character string of the keyword portion and registers the folder in the URL management memory 7.
Step S19 : The URL extraction section 6 reads the hypertext data out of the data buffer 5, extracts a character string representative of a URL (hereafter referred to as a URL character string) and a character string representative of a header (hereafter referred to as a header character string) therefor, and transmits the character strings to the URL register control section 8.
Step S20 : The URL register control section 8 checks whether or not the same character string as the transmitted URL character string exists under the folder registered in the URL management memory 7. If so, the process goes to Step S22, and if not, the process goes to Step S21. Now reference is made to Fig. 5.
Step S21 : The URL register control section 8 pairs the URL character string with its header character string and registers them under the folder.
Step S22 : It is judged whether the URL extraction section has read out all the hypertext data in the data buffer 5 and extracted all URL character strings and header character strings therefor and whether the URL register control section 8 has registered all these character strings.
If all the URL character strings and their header character strings have been registered under the folder, the process goes to Step S22, and if not, the process goes to Step S19.
Step S23 : The control section 10 judges whether or not the flag is 1. If so, the process goes to Step S24, and if not, the process goes to Step S26.
Step S24 : The control section 10 downloads, from the network, page data corresponding to the URLs in the folder registered in the URL management memory 7 and stores the downloaded data in the data management memory 9.
Step S25 : The control section 10 judges whether or not all page data corresponding the URLs in the folder registered in the URL management memory 7 has been downloaded and stored in the data management memory 9. If so, the process goes to Step S26, and if not, the process goes to Step S24.
Step S26 : The user decides whether to read another page data. If so, the process goes to Step S1, and if not, the process is ended.

In this example, while hypertext data is displayed, operations of registering URLs in the URL management memory and of displaying another page are performed. However, other operations, for example, of "returning to the display of the previous page," may be performed. Further, only the processing of hypertext data is described in the example, but this is merely an example and data in other form can also be processed.

According to the present invention, URLs indicating hyperlinks can be automatically extracted from hypertext data acquired by the data acquisition section, classified and registered in the URL management memory in correspondence with bookmarks. The user may retrieve a necessary URL by indicating the bookmark of the URL and use it for autocruising for hypertext data.

## Claims

1. An information-processing device comprising:
an interface section for communicating with a server having hypertext data via a network;
an input section for inputting a URL corresponding to hypertext data to be displayed:
a data acquisition section for acquiring the hypertext data from the server via the interface section according to the URL input by the input section;
a data buffer for temporarily storing the hypertext data acquired by the data acquisition section;
a URL extraction section for extracting a URL indicating a linkage from the hypertext data stored in the data buffer;
a URL register control section for classifying the URL extracted by the URL extraction section and registering the extracted URL in a URL management memory in correspondence with a bookmark; and
a display control section for displaying the bookmark, the URL and the hypertext data on a display.

2. The information-processing device according to claim 1, wherein the URL register control section generates a folder having a name input by the input section, classifies the extracted URL on the basis of the generated folder and registers the extracted URL in the URL management memory.

3. The information-processing device according to claim 1, wherein the URL register control section generates a folder whose name is a keyword extracted from the hypertext data, classifies the extracted URL on the basis of the generated folder and registers the extracted URL in the URL management memory.

4. The information-processing device according to any of claims 1 to 3, wherein the data acquisition section stores, in a data management memory, hypertext data corresponding to the URL registered in the URL management memory by the URL register control section.

5. A method for information processing comprising:
communicating with a server having hypertext data via a network by means of an interface section;
inputting a URL corresponding to hypertext data to be displayed by means of an input section;
acquiring the hypertext data from the server via the interface section according to the input URL;
temporarily storing the acquired hypertext data in a data buffer;
extracting a URL indicating a linkage from the hypertext data stored in the data buffer;
classifying the extracted URL and registering the extracted URL in a URL management memory in correspondence with a bookmark; and
displaying the bookmark, the URL and the hypertext data on a display.

6. The method according to claim 5 further comprising generating a folder having a name input by the input section, classifying the extracted URL on the basis of the generated folder and registering the extracted URL in the URL management memory.

7. The method according to claim 6 further comprising generating a folder whose name is a keyword extracted from the hypertext data, classifying the extracted URL on the basis of the generated folder and registering the extracted URL in the URL management memory.

8. The method according to any of claims 5 to 7 further comprising storing, in a data management memory, hypertext data corresponding to the URL registered in the URL management memory.

9. A storage medium containing thereon an information-processing program for controlling, by means of a computer, an information-processing device having an interface section for communicating with a server having hypertext data via a network, the program performing the functions of:
causing the computer to input a URL corresponding to hypertext data to be displayed by means of an input section;
causing the computer to acquire the hypertext data from the server via the interface section according to the input URL;
causing the computer to store the acquired hypertext data temporarily in a data buffer;
causing the computer to extract a URL indicating a linkage from the hypertext data stored in the data buffer;
causing the computer to classify the extracted URL and register it in a URL management memory in correspondence with a bookmark; and
causing the computer to display the bookmark, the URL and the hypertext data on the display section.

10. A storage medium containing thereon an information-processing control program as set forth in claim 9 further having the function of causing the computer to generate a folder having a name input by the input section, classify the extracted URL on the basis of the generated folder and register the extracted URL in the URL management memory

11. A storage medium containing thereon an information-processing control program as set forth in claim 9 further having the function of causing the computer to generate a folder whose name is a keyword extracted from the hypertext data, classify the extracted URL on the basis of the generated folder and register the extracted URL in the URL management memory.

12. A storage medium containing thereon an information-processing control program as set forth in any of claims 9 to 11 further having the function of causing the computer to store, in a data management memory, hypertext data corresponding to the URL registered in the URL management memory.
